# EUROPEAN PATENT SPECIFICATION

(11) **EP 4 485 174 B1**
(45) Date of publication and mention of the grant of the patent: **18.11.2026**
(21) Application number: 23182204.0
(22) Date of filing: 28.06.2023
(51) Int. Cl.: G06F 8/65, H04N 7/18, G06F 21/57

(54) **VIDEO SURVEILLANCE SYSTEM AND METHOD OF OPERATING THEREOF**
VIDEOÜBERWACHUNGSSYSTEM UND VERFAHREN ZUM BETRIEB DAVON
SYSTÈME DE SURVEILLANCE VIDÉO ET SON PROCÉDÉ DE FONCTIONNEMENT

(43) Date of publication of application: 01.01.2025
(73) Proprietor: Milestone Systems A/S, 2605 Brøndby (DK)
(72) Inventor: RASMUSSEN, John Hertel, 2605 Brøndby (DK)
(74) Representative: Canon Europe Limited

(56) References cited:
- US-A1- 2016 335 070
- US-A1- 2023 123 999
- US-A1- 2023 195 450

## Description

### TECHNICAL FIELD

The present disclosure generally relates to video surveillance systems and methods of operating such systems.

### BACKGROUND

Modern video surveillance systems have evolved into highly complex and often heterogeneous systems comprising a large number of different peripheral devices and computer hardware elements that are tied together via a networked infrastructure, and controlled by means of advanced management software. One important component of modern video surveillance systems is a video recording and processing system that allows video streams from one or more video cameras to be received, stored and processed.

A video management system, also known as video management software (VMS), is a component of a video camera surveillance system that provides video management services, such as one or more of the following: collecting one or more video streams from one or more video cameras, storing the received one or more video streams to a storage device and providing an interface to view the received one or more live video streams and/or to access one or more stored video streams.

As with most software products, the VMS needs to be updated for a variety of reasons such as to support, handle and exploit new and existing hardware systems or devices, to fix any detected vulnerabilities in the software code, to provide new software functionalities, and more generally speaking to maintain and support existing VMS installations.

As video surveillance systems become increasingly complex and distributed over different hardware systems, devices and locations, updating and upgrading the VMS is proving more and more difficult and time-consuming. Any such updates and/or upgrades further need to be installed in a certain order as some pieces of software rely on others, and it is sometimes desirable to rollback an update or upgrade after it has been installed. Moreover, it is desirable to guarantee that such updates and/or upgrades come from trusted sources and are thus safe to use.

As a VMS is part of the physical security of a site, downtime of the VMS is not desired. System updates therefore need to be made in a way that does not affect daily operations, as even few minutes of downtime can be detrimental to the physical security of a site.

For all these reasons, there is a risk that users will delay or avoid updating and/or upgrading their VMS, and also a risk of compromising any existing VMS installations if such updates and upgrades are not correctly installed.

On this background, it is generally desirable to provide a video surveillance system comprising video management software that is easier to update and/or upgrade.

The prior art of record comprises document US2023/195450A1, which discloses a system configured to obtain a current status of a cloud deployment based on captured logs reflecting operational characteristics of the cloud deployment. The system is configured to transmit the current status to a central upgrade server. Further still, the system is configured to receive, from the central upgrade server, a task to be performed at the cloud deployment.

The prior art of record also comprises document US2023/123999A1, which discloses systems and methods for high-availability (HA) management networks for High Performance Computing (HPC) platforms comprising Baseboard Management Controllers (BMCs).

The prior art of record also comprises document US2016/335070A1, which discloses systems and methods for upgrading a physical security system comprising multiple server nodes, using different protocols.

### SUMMARY

It is an object of at least some aspect described in the present disclosure to solve one or more of the problems identified above and/or other problems associated with existing video surveillance systems, or at least to provide an alternative to known systems.

According to a first aspect of the invention, disclosed herein are embodiments of a video surveillance system as specified in any one of claims 1 to 8.

According to a second aspect of the invention, disclosed herein are embodiments of a method of operating a video surveillance system as specified in any one of claims 9 to 12.

### BRIEF DESCRIPTION OF THE DRAWINGS

The above and other aspects will be apparent and elucidated from the embodiments described in the following with reference to the drawing in which:
FIG. 1A schematically illustrates an example of a video surveillance system according to the first aspect of the invention;
FIG. 1B illustrates a flowchart of a method of operating a video surveillance system such as the one in FIG. 1A, according to the second aspect of the invention;
FIGS. 2A, 3A, and 4A are based on FIG. 1A and highlight which communication channels in FIG. 1A are used in an example of a sequence for downloading (or pushing) and installing software updates and/or upgrades;
FIGS. 2B, 3B, 4B, and 4C schematically illustrate a graphical user interface displayed to a user in the same example sequence for downloading (or pushing) and installing software updates and/or upgrades;
FIG. 4D highlights which communication channel in FIG. 1A is used for downloading (or pushing) and installing a software update and/or upgrade on an on-premises client device;
FIGS. 5A and 6A are based on FIG. 1A and highlight which communication channels in FIG. 1A are used for downloading (or pushing) and installing a device pack, a patch, and a plug-in, respectively, on servers in the video surveillance system; and
FIGS. 5B, 5C and 6B schematically illustrate a graphical user interface displayed to a user when downloading (or pushing) and installing the same device pack, patch, and plug-in.

### DETAILED DESCRIPTION

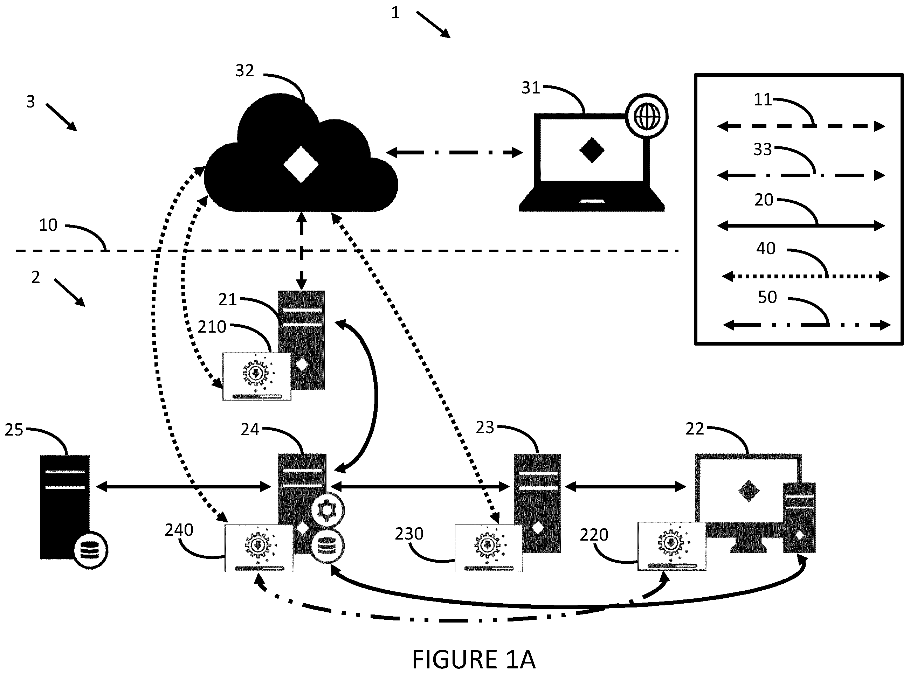

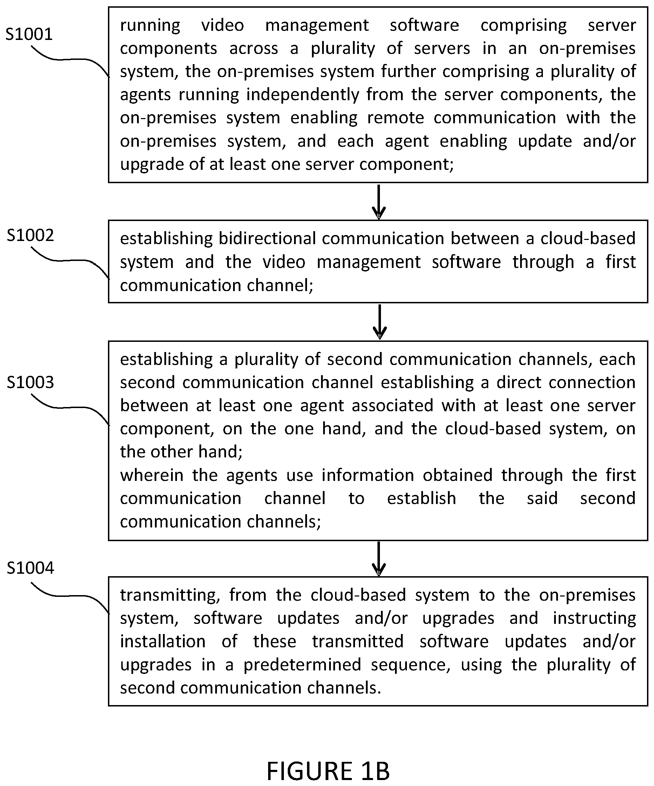

FIG. 1A shows an example of a video surveillance system 1 comprising an on-premises (or "on-site") system 2 and a cloud-based system 3, which are schematically separated by a dotted line 10. A box in the right part of FIG. 1A shows several arrows 11, 33, 20, 40, 50 which correspond to communication channels on a network connecting different parts of the system 1. The same arrows in subsequent figures should be construed as having the same meaning as those in FIG. 1, and their reference numerals might be omitted in the figures for the sake of clarity. However, some communication channels will be highlighted by repeating their reference numerals. These communication channels will be described below. Within the context of the present invention, the term "communication channel" should be construed as having its usual meaning in the art.

The on-premises system 2 runs video management software (VMS), such as XProtect^{®} from Milestone Systems A/S^{®}, which includes a plurality of server components. In the present example, the system 2 comprises, as server components, a cloud connector 21, a client device 22 and a plurality of server components 23, 24, 25. The video surveillance system 1, and preferably the on-premises system 2, may comprise a plurality of video surveillance cameras (not shown) and/or security devices (e.g. access control devices, connected smoke alarms etc.). In the present example, the reference number 24 illustrates a server computer which combines the functions of a management server, an event server, and a log server. The management server is the central VMS component. It stores the configuration of the surveillance system in, for example, a SQL database. This database can be on the server 24 or in a separate server computer 25 as in the present example. The management server may handle user authentication, user permissions, a rule system etc. In the example of FIG. 1A, the event server (in the server computer 24) may handle tasks related to events, alarms, maps etc. in a known way. The log server (in the server computer 24) may store all log messages for the entire on-premises system 2. The log server typically uses the same SQL Server 25 as the management server but preferably has its own SQL database. The log server write log messages to log errors, warnings, user activity, specific events etc. in a known way.

The on-premises system 2 further comprises one or more recording servers 23 which is or are responsible for all communication, recording, and event handling related to devices such as cameras, video and audio encoders, I/O modules, and metadata sources. For example, the recording server may retrieve video, audio, metadata and I/O event streams from the devices, record video, audio and metadata from devices, provide operators with access to live and recorded video, audio and metadata, provide operators with access to device status, trigger system and video events on device failures or events, and perform motion detection and generate smart search metadata etc. in a known way.

Note that the invention is not limited to the above configuration. One or more of the aforementioned servers of the on-premises system 2 may be combined into a single apparatus or server. Other servers or apparatuses may be present in the video surveillance system. Some configurations may include hundreds of recording servers, and/or dedicated servers such as a License Plate Recognition (LPR) server for recognizing license plates and/or a Mobile server for handling logins to the system from mobile applications. As another option, an archiving server (not illustrated) may also be provided for archiving older data stored in the recording server(s) 23 which does not need to be immediately accessed from the recording server(s) 23, but which the user does not desire to delete permanently. One or more fail-over servers (not illustrated) may be provided in case one or more of the said servers 23, 24, 25 fails. An analytics server can also run analytics software for image analysis, for example motion or object detection, facial recognition, event detection. The functions of some of these servers may also be spread across different computer servers. For instance, the functions of the computer server 24 may be spread across several hardware devices. The present invention is not limited to a particular number of (physical or virtual) servers and/or server components. Additional examples of system configurations and possible servers can for instance be found in Milestone's white paper "System Architecture Guide for IT Professionals" dated 14 September 2020, available at https://content.milestonesys.com/l/151d5cb71d71d29b/ .

That is, according to the invention, the term "server" can be construed as meaning a piece of computer hardware or software that provides functionality for other programs or devices.

For example, the cloud connector 21, and above-mentioned server components 23, 24, 25 may be embodied as a software program module executed by a suitable data processing system, e.g. by one or more server computers.

In the present example, some server components such as the management, event and log servers are implemented in the same physical server.

That is, according to the invention, at least two different servers in the plurality of servers may be implemented as different pieces of software running on the same computer hardware. Additionally or alternatively, at least two different servers in the plurality of servers may be implemented as different pieces of computer hardware.

The video cameras may be conventional video cameras known as such in the art of video surveillance. It will be appreciated that the video surveillance system may include a plurality of video cameras of the same type, i.e. video cameras having the same capabilities, providing the same type of video output, in the same format etc. Alternatively, many examples of video surveillance systems may include cameras of different types, e.g. video cameras having different capabilities, providing video streams of different resolution, in different formats or outputting additional metadata associated with the video, using different encoding schemes and/or different network protocols, and/or providing different interfaces for camera control such as pan, tilt, or zoom. Examples of capabilities of video cameras may include one or more of the following: audio recording, video recording in visible wavelength ranges and/or in infrared wavelength ranges, such as near-infrared wavelength ranges, control functions such as pan or zoom, image processing capabilities, motion detection, etc.

The said video cameras are preferably connected to the recording server(s) 23 via a LAN network (not shown). The said video cameras may be directly connected to the recording server(s) 23, via such a LAN network or otherwise.

The one or more video cameras are typically distributed across an area where surveillance is desired e.g. across the premises of a facility where surveillance is desired. The number and position of cameras as well as the type of camera to be installed may be selected based on factors such as the level of surveillance desired, the size of the facility and/or the complexity of the layout of the facility. The video cameras are communicatively connected to the video management software. To this end, the video cameras may be connected to the video management software via a local area network or in a different suitable manner, e.g. via point-to-point wired and/or wireless connections, or the like. For example, the video cameras may be connected to the video management software via an Ethernet connection. An example of a wireless connection includes a 5G network. It will be appreciated that some examples of video surveillance systems may include additional sensors providing sensor signals and/or media streams different from video streams, such as audio signals, radar signals, Lidar signals, etc.

The recording server receives the input video streams originating from the respective video cameras using corresponding camera drivers. Accordingly, the video management software may include a plurality of different camera drivers configured to cooperate with respective camera types. In particular, the camera drivers may implement one or more suitable network protocols and/or other communications standards for communicating with video cameras and/or other surveillance equipment. Examples of such protocols and standards include the Open Network Video Interface Forum (ONVIF) standard and the Real Time Streaming Protocol (RTSP).

The camera drivers may add one or more time stamps to the received video signals so as to ensure that the video streams, which are stored and subsequently supplied by the video management software, include a uniform time stamp. The added time stamp will also be referred to as a canonical time stamp. The canonical time stamp is indicative of the time of receipt, by the video management software, of the video streams from the respective video cameras. The camera drivers thus provide uniformly time-stamped input video streams, each time-stamped input video stream corresponding to a respective one of the received video streams.

The recording server stores the received input video streams in a suitable media storage device and in a suitable media database (media repository), in a known way. The storing of the received input video streams is also referred to as recording the received input video streams. The recording server(s) may receive additional input signals, such as audio signals, motion detection signals, etc. associated with the input video streams. The additional input signals may originate from the video cameras and/or from other signal sources, such as from additional surveillance sensors. The video management software may store the additional input signals in the media repository and/or in one or more separate storage devices.

The recording server(s) may be configured to selectively provide the live input video streams and/or previously stored input video streams retrieved from the media repository via a suitable interface to one or more external entities. The interface may implement one or more suitable network protocols and/or other communications standards for communicating with other surveillance equipment. Examples of such protocols and standards include the Open Network Video Interface Forum (ONVIF) standard and the Real Time Streaming Protocol (RTSP).

Optionally, the interface may implement different communications channels to other types of external entities. Examples of external entities include a video-receiving system, which may receive video streams and provide functionality for viewing and/or processing the video streams. Other examples of external entities include a video analytics system, which may receive video streams and perform video processing for analysing the video streams. To this end, the video analytics system may perform object detection, object recognition, motion detection and/or other types of video analytics. The video analytics system may create video metadata indicative of the results of the video analytics performed. For example, the video analytics systems may create video metadata indicative of recognized objects in a video stream. The metadata may include information about the spatial and temporal positions of recognised objects in the video stream and/or information about the identity of the recognized object. The analytics systems may store the generated metadata in a suitable metadata repository. In some embodiments, the analytics systems may communicate the generated metadata back to the video management software. The video management software may store the returned metadata in a suitable metadata repository, such as a suitable metadata database, which may be separate from or integrated into the media repository. To this end, the video management software may include an index server. The index server may be embodied as a software program module executed by a suitable data processing system, e.g. by one or more server computers. The index server may receive metadata and store the received metadata in the metadata repository. The index server may further index the stored metadata so as to allow faster subsequent search and retrieval of stored metadata. Metadata received from the external analytics systems may be received by the recording server(s) and forwarded to the index server. Alternatively or additionally, the index server may receive metadata directly from one or more analytics systems.

The interface may implement different types of interfaces. For example, the interface may provide an application interface, e.g. in the form of a software development kit and/or one or more communication protocols, such as a suitable messaging protocol, e.g. SOAP, XML, etc. Accordingly, the interface may operate as a gateway to different types of systems.

The communications network may be the Internet or another suitable communications network. It will be appreciated, however, that at least some of the other entities may reside on the same data processing system as the video management software or on a data processing system connected to the video management software via a local area network, instead.

The recording server(s) 23 is/are preferably responsible for communicating with an on-premises client device 22. The client device 22 may be configured to manage the said video cameras and may provide instant control of the video cameras and connected security devices, and access to live and recorded video and metadata.

The recording server(s) 23 preferably supports encryption of data streams to the on-premises client device 22 and services as well as encryption of the connection with the management server 24. In the present example, the client device 22 also includes the function of a management client by providing an administration interface for all parts of the on-premises system 2, in a known way.

In the present example, the said server components of the VMS run across the plurality of server components 23, 24, 25. In the present example, at least the management server, event server, log server (the above-described computer server 24) and recording server(s) 23 need updating and/or upgrading, and are configured as server components of the VMS. The on-premises system 2 includes a plurality of agents 230, 240 which run independently from the server components and are respectively configured to enable update of at least one server component, e.g. update of the management server, event server, log server and/or recording server(s), regardless of whether these servers are implemented as standalone or combined hardware devices (i.e. as one or more computer servers).

The agents are installed with the server components to which they correspond, without being a part of the video management software.

Note that when the said video management software comprises a plurality of video management software programs, at least one agent may be associated with server components in the plurality of video management software programs. This allows to limit the number of agents needed to update and/or upgrade the video management software.

The agents are configured to install received software updates and/or upgrades. To this end, the video surveillance system may be configured such that the agents run with all necessary rights, e.g. administrator rights.

The agents may themselves be updated and/or upgraded. For instance, an update and/or upgrade for updating an agent may be received with an update for a server component, and installed after the update for the server component has successfully been downloaded (or pushed) and installed.

To assist with verifying that the software being downloaded (or pushed) and installed is genuine, the agents may be configured to perform data origin authentication. For example, the agents may use The Update Framework (TUF) from the Linux Foundation or any other similar solution, e.g. validation tokens, security certificates deployed from the cloud-based system 32 to the on-premises system 2, public-key cryptography etc.

The on-premises system 2 preferably includes a cloud connector 21, as a software service. The cloud connector 21 is used to create a first communication channel, which will be described below. The cloud connector 21 may operate on a separate computer as in the example of FIG. 1A or may operate on the same server computer as the server computer 24. The cloud connector 21 communicates with the VMS as a whole through an API gateway of the VMS and is used to connect the on-premises system 2 to the cloud-based system 3, and enable bidirectional communication between them. The on-premises system 2 preferably includes an agent 210 and another agent 220 which also run independently from the server components and are respectively configured to enable update of the cloud connector 21 and on-premises client device 22. The server components communicate with one another through communication channels represented by solid arrows 20. These communication channels may be built upon a network connecting the server components as network nodes.

The cloud-based system 3 comprises a remote client device 31 and a cloud-based management system 32. The remote client device 31 may be configured to instruct installation of software updates and/or upgrades for the server components. The remote client device 31 may alternatively or additionally be configured to access and control the VMS on the on-premises system 2 as if it were the on-premises client device 22. In these cases, the remote client device 31 will communicate with the VMS through a cloud communication channel represented by dashed line arrow 33 directly connecting the remote client device 31 with the cloud-based management system 32, and a site communication channel represented by dashed line arrow 11 directly connecting the cloud-based management system 32 to the cloud connector 21.

According to the present example, the communication channels represented by the arrows 33, 11 and 20, that is the communication channels directly connecting the remote client device 31 and the cloud-based management system 32, the cloud-based management system 32 and the cloud connector 21, the cloud connector 21 to the server component 24, and the server component 24 to the server components 23 and 25, respectively, form in combination a first communication channel.

That is, according to the invention, the cloud-based system 3 and on-premises system 2 establish bidirectional communication through a first communication channel. The first communication channel allows communication between the cloud-based system 3 and VMS of the on-premises system 2 as a whole. According to the invention, the first communication channel is not used to transfer software updates and/or upgrades to the on-premises system 2 but is used to set up the said bidirectional communication in the first place and then, optionally, access and control the VMS on the on-premises system 2.

Within the context of the present invention, the terms "software updates and/or upgrades" cover newer and/or elevated versions of existing software components, regardless of their sizes and functions in the video management software. Each of these software components can thus correspond to a defined software unit, a part of an application, an entire application, or the like. Example of such software components include in particular application programs (e.g. services, processes), patches, plug-ins, APIs, device drivers, or the like, and parts or combinations thereof. The terms "update" and "upgrade" as used within the context of the present invention are generally interchangeable, unless mentioned otherwise. Each "update" and/or "upgrade" may comprise an installer to install that update or upgrade, respectively. Moreover, the video surveillance system may further be configured to transmit, from the cloud-based system to the on-premises system, software downdates and/or downgrades, and to instruct installation of these transmitted software downdates and/or downgrades in a predetermined sequence, using the plurality of second communication channels. In this way, it is possible to rollback software that has been deployed from the cloud to the on-premises system.

The cloud-based management system 32 may be configured to orchestrate and control the update process across all of the server components, ensure the on-premises server components are updated in the right order, create and store a backup of the existing on-premises configuration before updating and/or upgrading any of its server components, act as a stable end-point for both the remote client device 31 triggering the update process and the agents, and provide a secure end-point 32 to the agents that can be trusted and validated.

According to the present example, the video surveillance system 1 further includes a plurality of second communication channels represented by dashed line arrows 40, that is direct communication channels between the cloud-based management system 32 and the agents 210, 230 and 240, which are respectively associated with the cloud connector 21, the recording server(s) 23 and the server computer 24 which combines the functions of a management server, an event server, and a log server.

That is, according to the invention, the cloud-based system 3 and agents in the on-premises system 2 associated with server components in the on-premises system 2, establish direct connection channels, to transfer software updates and/or upgrades to the on-premises system 2. According to the invention, the agents are configured to use information obtained through the first communication channel to establish the said second communication channels.

According to the present example, the agent 220 associated with the on-premises client device 22 does not directly receive any software updates and/or upgrades from either one of the first and second communication channels but receives software updates and/or upgrades directly from the agent 240 associated with the management server in the server computer 24. That is, software updates and/or upgrades intended for the agent 220 are first transferred to the agent 240 associated with the management server in the server computer 24, and then transferred from that agent 240 to the agent 220 associated with the on-premises client device 22 through a dedicated communication channel represented by dashed line arrow 50.

The second communication channels are preferably secured using SSL or any other similar solutions.

According to the invention, the agents run in the same (virtual or physical) environment or server as the server components to which they are respectively associated. For example, the agent 210 runs in the same physical environment (here, the same computer) as the cloud connector and the agent 240 runs in the same environment (here, the same computer) as the management, event, and log servers. Thus, according to the invention, the same agent may be associated with several server components running in the same (physical or virtual) environment, for example under the same Microsoft^{®} Windows^{®} operating system. The agent 220 runs in the same physical environment (here, the same computer) as the on-premises client device 22.

FIG. 1B illustrates a flowchart of a method of operating a video surveillance system such as the one in FIG. 1A, according to the second aspect of the invention.

In a first step S1001, the method comprises running video management software comprising server components across a plurality of servers in an on-premises system, the on-premises system further comprising the said plurality of agents running independently from the server components, the on-premises system enabling remote communication with the on-premises system, and each agent enabling update of at least one server component.

In a second step S1002, the method comprises establishing bidirectional communication between a cloud-based system and the video management software through a first communication channel.

In a third step S1003, the method comprises establishing a plurality of second communication channels, each second communication channel establishing a direct connection between at least one agent associated with at least one server component, on the one hand, and the cloud-based system, on the other hand; wherein the agents use information obtained through the first communication channel to establish the said second communication channels;

In a fourth step S1004, the method comprises transmitting, from the cloud-based system to the on-premises system, software updates and/or upgrades and instructing installation of these transmitted software updates and/or upgrades in a predetermined sequence, using the plurality of second communication channels.

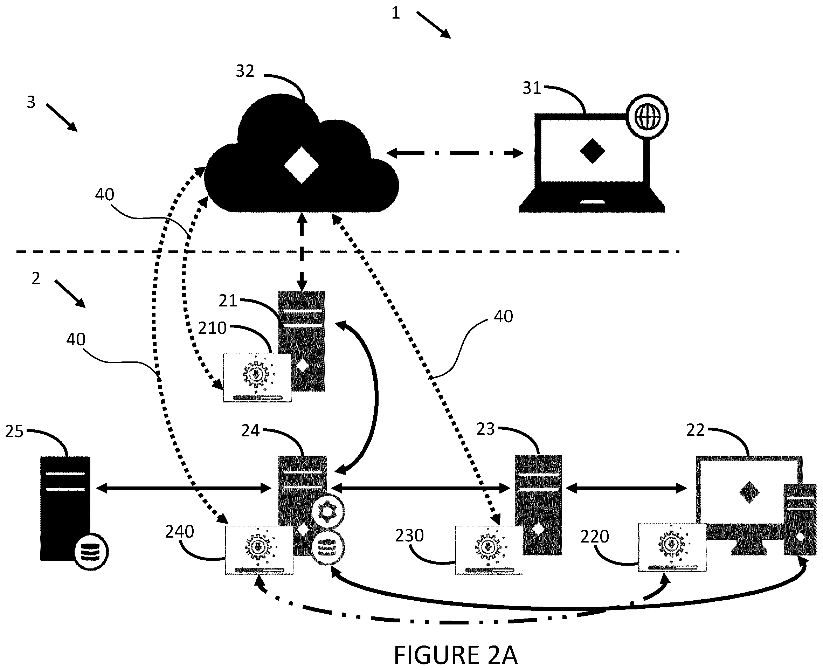

In the method of operating a video surveillance system above, the predetermined sequence preferably defines an installation order for different software updates and/or upgrades within different server components and an installation order for different software updates and/or upgrades between these server components. An example of such a sequence will be given with reference to FIGS. 2A to 4C.

FIG. 2A highlights the second communication channels 40 that will be used in an example of the sequence for downloading (or pushing) and installing software updates and/or upgrades on the recording server(s) 23, the management, event, and log servers (24), and the cloud connector 21.

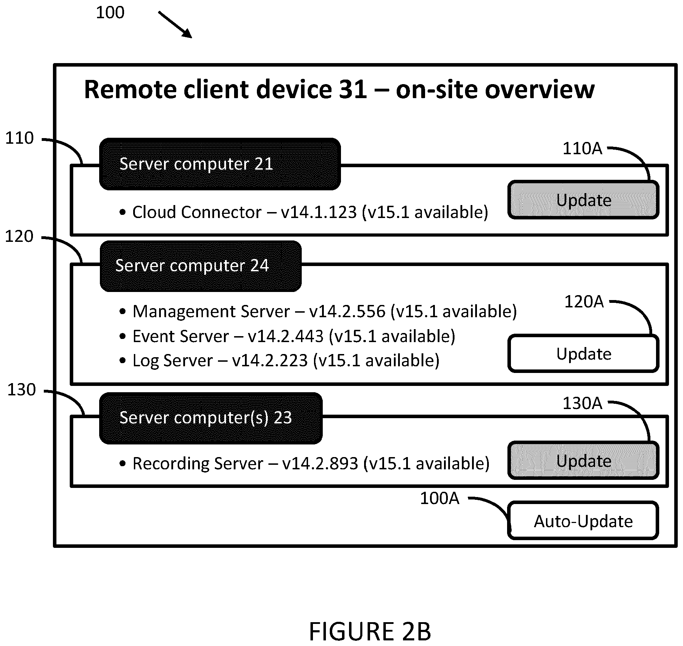

FIG. 2B schematically illustrates a graphical user interface 100 displayed to a user at the remote client device 31 at the beginning of the predetermined sequence.

In the present example, the interface 100 displays three lists of updates and/or upgrades 110, 120, 130, which are respectively available for the server computer 21 (cloud connector 21), server computer 24 and server computer(s) 23. The first list 110 indicates that an update and/or upgrade for the cloud connector 21 is available such that it can be upgraded from version 14.1.123 to version 15.1. Similarly, the second list 120 indicates that an update and/or upgrade is available for each of the management server, event server and log server, implemented as the computer server 24, such that they can be upgraded, in that predetermined order, from versions 14.2.556, 14.2.443, and 14.2.223, respectively, to versions 15.1.X. In addition, the third list 130 indicates that an update and/or upgrade is available for the recording server(s) 23 such that it/they can be upgraded from version 14.2.893 to version 15.1. An update button 110A, 120A and 130A is, in the present example, provided for each of the lists 110, 120, 130. However, in the present example, the predetermined sequence requires to update first and foremost the management server, event server and log server, implemented as the computer server 24, and the update buttons 110A and 130A are therefore greyed out to prevent any updates and/or upgrades from being downloaded (or pushed) and installed from the cloud-based management system 32. Accordingly, the user is here only allowed to trigger the update of the management server, event server and log server, by pressing on the update button 120A. Alternatively and/or additionally, the interface 100 may be provided with an auto-update button 100A that allows the user to start the update and/or upgrade process for all of the server components, according to the predetermined sequence.

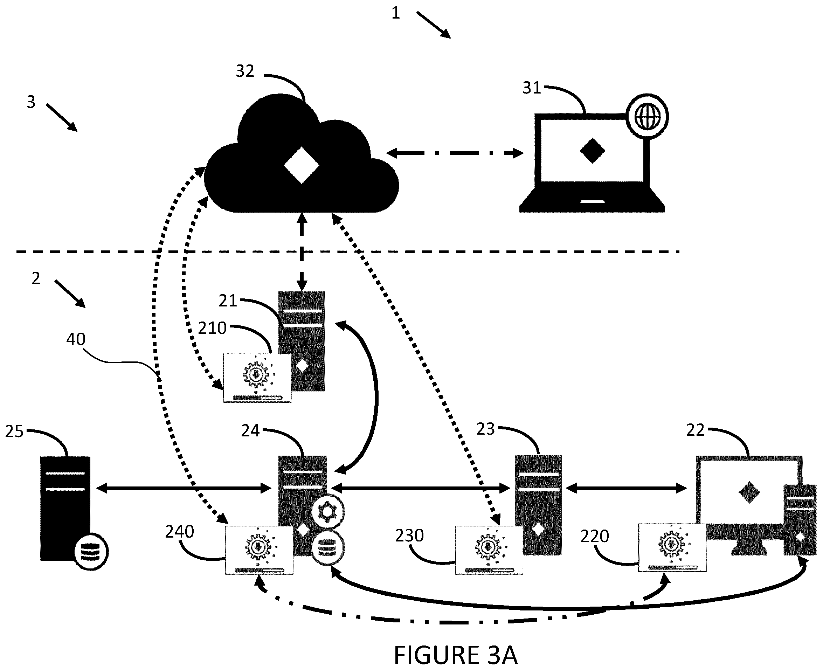

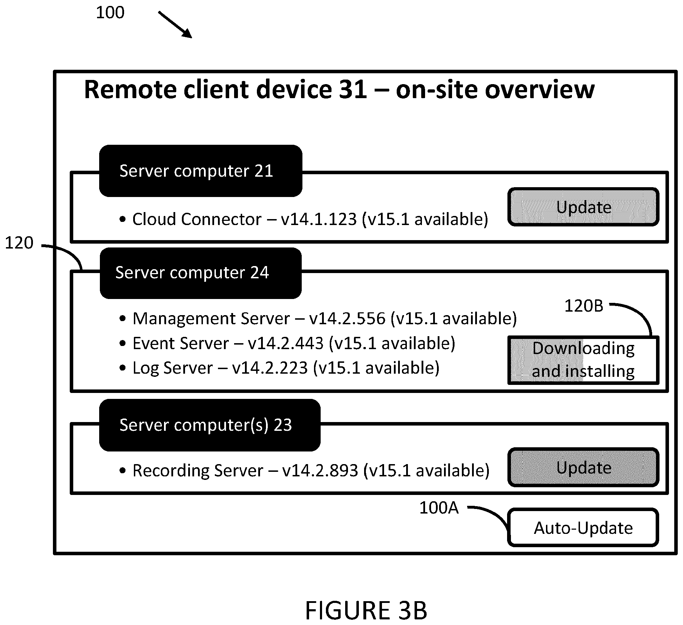

In the present example, assuming the user presses on the update button 120A, a command is sent to the agent 240 of the computer server 24 to download (or push), from the cloud-based management system 32, updates and/or upgrades (including installers) for the management server, the event server and the log server, and to install them, using the second communication channel 40 highlighted in FIG. 3A. Once download(s) are started, progress information is sent to and displayed at the remote client device 31 and the interface 100 of FIG. 2B at the remote client device 31 will then transition to that of FIG. 3B, wherein the update button 120A is changed to the button 120B to indicate that upgrades are being downloaded (or pushed) from the cloud-based management system 32.

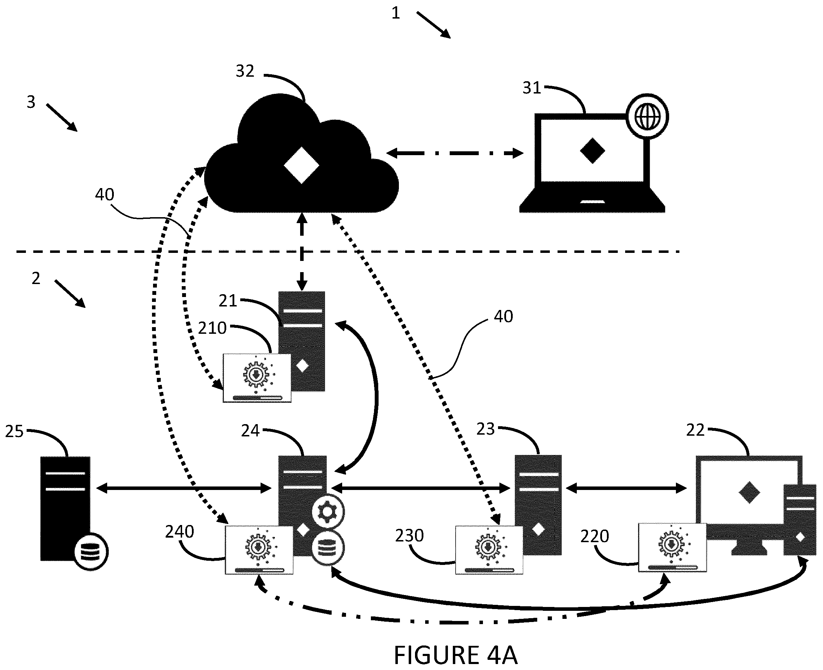

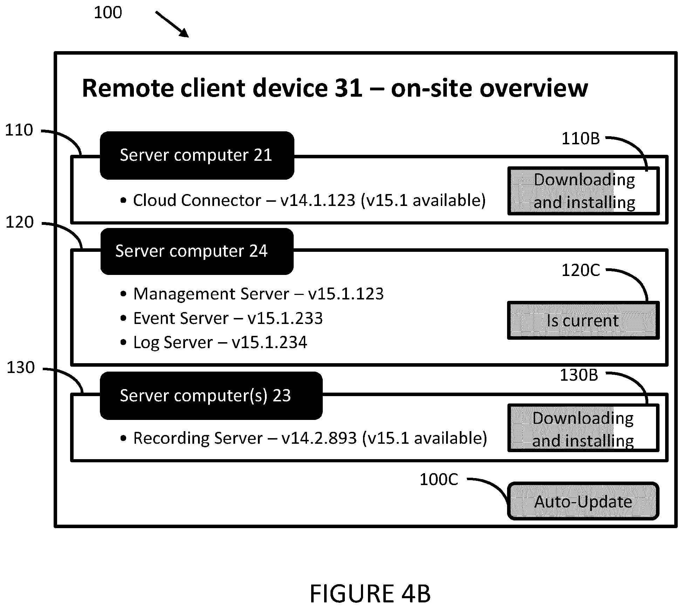

Once the updates indicated in the second list 120 are installed, the user may proceed with downloading and installing the updates for the cloud connector 21 and recording server(s) 23 by clicking on the update buttons 110A and 130A as they become available. Respective commands will then be sent to the agents 210 and 230 of the cloud connector 21 and recording server(s) 23 to download (or push), from the cloud-based management system 32, the updates and/or upgrades (including installers) indicated in the first and third lists 110, 130 for the cloud connector 21 and recording server(s) 23, and to install them, using the second communication channels 40 highlighted in FIG. 4A. The interface 100 of FIG. 3B at the remote client device 31 will then transition to that of FIG. 4B, wherein the update button 110A, 120B, 130A are changed to the buttons 110B, 120C, 130B to indicate that updates from the first and third lists 110, 130 are being downloaded (or pushed) from the cloud-based management system 32, and that the updates indicated in the second list 120 have successfully been installed. Note that in the present example, the predetermined sequence provides that respective software updates and/or upgrades are concurrently transmitted to corresponding server components using second communication channels associated with these server components, i.e. the updates and/or upgrades indicated in the first and third lists 110, 130 are concurrently transmitted to, and installed on, the cloud connector 21 and recording server(s) 23, respectively, based on a sequence coded into the cloud-based management system 32 and based on information sent to it via the cloud connector 21 (such as server component version numbers).

In a case where different updates and/or upgrades are concurrently transferred to, and installed on, different server components, the second communication channels allow to maintain communication between the agents receiving the updates and/or upgrades on the one hand and the cloud-based system on the other hand.

For example, when the cloud connector 21 and the recording server(s) 23 are being updated and/or upgraded at the same time as in FIGS. 4A/4B, the second communication channel 40 between the agent 230 and the cloud-based system 32 allows to maintain communication between the agent 230 and cloud-based system 32. That is to say, on the contrary, if communication between the agent 230 and cloud-based system 32 were to be established through the cloud connector 21 using the first communication channel (arrows 11 and 20 in FIG. 1A), that communication could be interrupted during a concurrent update of the cloud connector 21, for example, if the cloud connector 21 goes offline as it is rebooted by an update or if the update fails. Similarly, that communication could also be interrupted by an update of the management server 24, for example, if the management server 24 goes offline as it is rebooted by an update or if the update fails (assuming that the predetermined sequence would allow a concurrent update of the management server 24 and recording server(s) 23). This would leave the agent 230 without a communication end-point and would prevent a user from obtaining information regarding, for example, progress of an installation of an update on the recording server(s) 23, and could complicate a reattempt of the installation, a recovery of the server(s) being updated and/or hinder use of a fallback solution. Alternatively and/or additionally, the first communication channel may be disconnected when a predetermined number of on-premises server components are being updated at the same time (for example three server components), to prevent malfunction of the video management software.

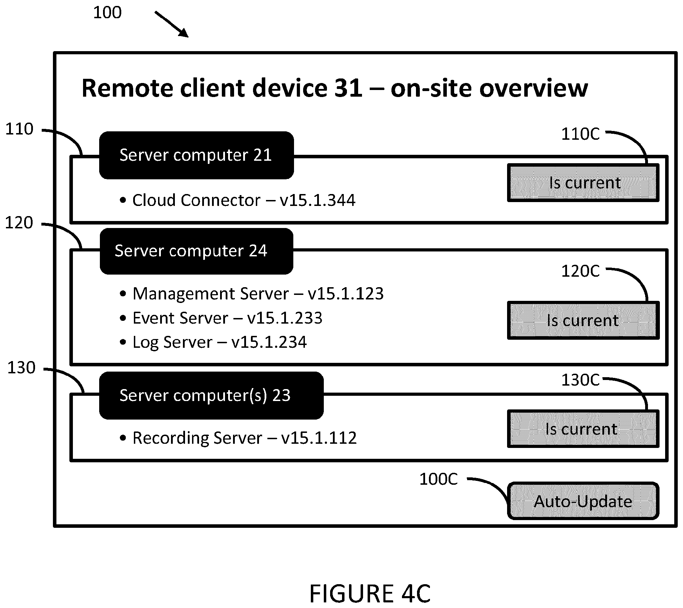

The interface 100 of FIG. 4B at the remote client device 31 will then transition to that of FIG. 4C, wherein the button 110B and 130B are changed to the buttons 110C and 130C to indicate that the updates listed in the first and third lists 110, 130 have successfully been downloaded (or pushed) and installed.

Note that the auto-update button 110A shown in FIGS. 2B and 3B, for automatically downloading (or pushing) and installing all remaining updates, becomes unavailable (for example greyed out) in FIG. 4B after the user has triggered download and installation of all available updates from the cloud-based management system 32 indicated in the lists 110, 120, 130. That is, the auto-update button may remain available up until (but not including) the last available update is downloaded (or pushed) and installed in the order of the predetermined sequence. In other words, the user may be authorised to manually trigger download and installation of some available updates using, for example the buttons 120A and 130A, and then complete the update process using the auto-update button 100A (which will have the same effect as using the button 130A in the present example when it becomes available, i.e. after the buttons 120A and 110A have been pressed in that order).

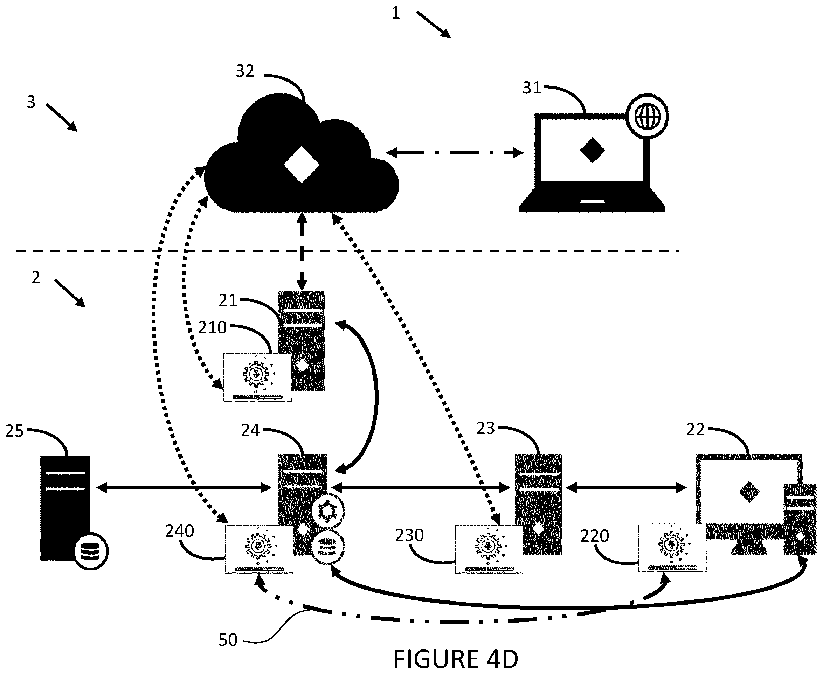

The update process of the on-premises client device 22 may differ from the above description in that the update for the on-premises client device 22 is not directly obtained from the cloud-based management system 32, but obtained from the on-premises management server 24. In that case, the update for the on-premises client device 22 may initially be transferred from the cloud-based management system 32 to the agent 240 of the on-premises management server 24, and then obtained by an agent 220 of the on-premises client device 22 through the dedicated communication channel represented by dashed line arrow 50 in FIG. 4D. This update may be downloaded (or pushed) and installed on the on-premises client device 22 after all updates available from the cloud-based management system 32 indicated in the lists 110, 120, 130 are downloaded (or pushed) and installed. Alternatively, the update may be downloaded (or pushed) and installed on the on-premises client device 22 at any point after all updates indicated in the list 120 for the management server are downloaded (or pushed) and installed, i.e. as soon as the management server is successfully updated and/or upgraded. In either case, when the on-premises client device 22 logs in to the management server in the computer server 24, the user will be informed that a new update and/or upgrade is available and be asked (or alternatively forced, depending on a configuration decided by an administrator) to update and/or upgrade the on-premises client device 22. When such an update and/or upgrade is accepted by the user (or otherwise automatically accepted), the on-premises client device 22 will close, and trigger the agent 220 to download (or push) the update and/or upgrade (new client installer) from the management server in the computer server 24 and install it. Upon completion, the updated and/or upgraded on-premises client device 22 is opened again.

The above examples relate to downloading (or pushing) and installing software updates and/or upgrades. As it has been explained above, the predetermined sequence preferably defines an installation order for different software updates and/or upgrades within different server components (e.g. installation order for the different servers within the server computer 24) and an installation order for different software updates and/or upgrades between these server components (e.g. installation order between the server computer 24, cloud connector 21 and recording server(s) 23).

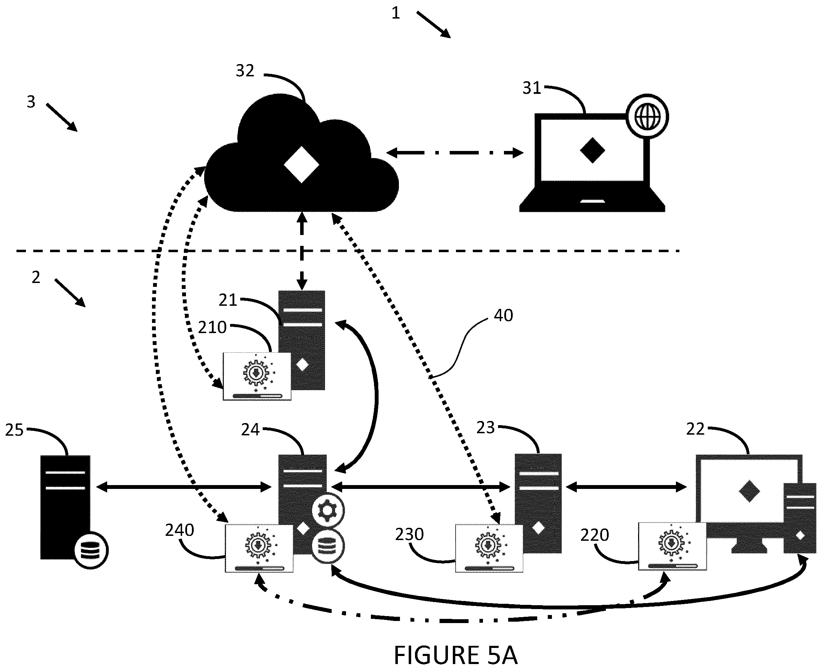

A description will now be given of an example of an upgrade related to a device pack, i.e. a set of device drivers, with reference to FIGS. 5A to 5B.

This device pack can be seen as an add-on to the recording server(s) 23. In the present example, the cloud-based management system 32 is here able to provide an upgraded device pack as indicated in the third list 130 such that an existing device pack can be upgraded from version 12.3 to version 12.5. Note that the initial device pack may be deployed with, or alternatively separately from, the recording server which operates as a service on a dedicated server computer 23 in the example of FIG. 5A. An update button (not shown but similar to the button 130A in FIG. 2B), in the present example, allows a user to update the said device pack in a similar way to the previous examples. Similarly to the previous examples, an auto-update button may be provided to allow the user to start the update and/or upgrade process for the device pack. Note that such device packs are independent updates and/or upgrades of the server components, and are thus not dependent on the predetermined sequence.

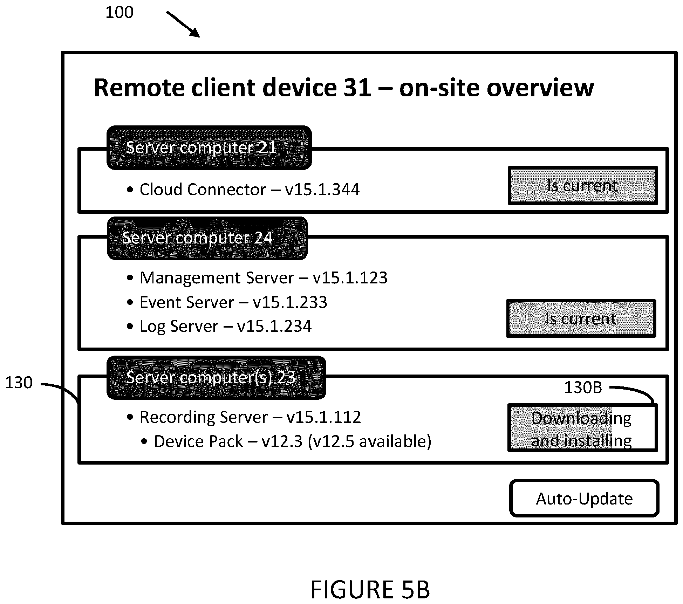

Assuming the user presses on the update button, a command is sent to the agent 230 of the recording server(s) 23 to download (or push), from the cloud-based management system 32, the device pack as indicated in the third list 130 for the recording server(s) 23, and to install the device pack, using the second communication channel 40 highlighted in FIG. 5A. The interface 100 of FIG. 5B at the remote client device 31 may be updated in real time as in the above examples, e.g. to grey out the auto-update button after the user has clicked on the last available update button (not shown but similar to the button 130A in FIG. 2B), to display an update button 130B to indicate that the upgrade from the third list 130 is being downloaded (or pushed) from cloud-based management system 32 etc.

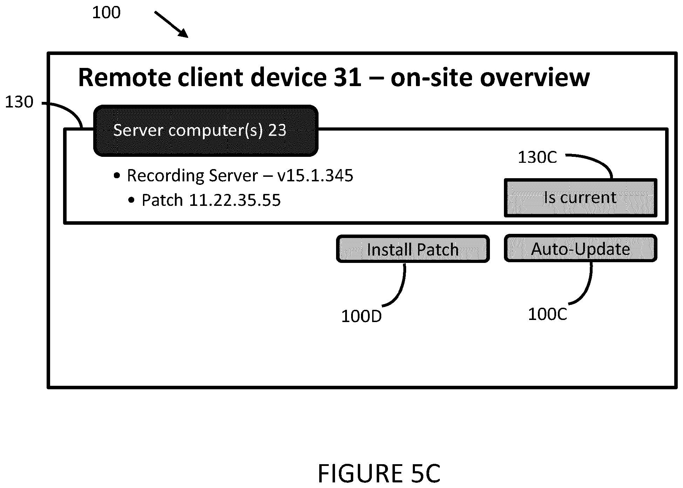

A description will now be given of an example of an upgrade related to a patch, with reference to FIG. 5C.

FIG. 5C shows an interface that is displayed after a patch has been downloaded (or pushed) from the cloud-based management system 32 as indicated in the third list 130, in the same way as the device pack of FIGS. 5A and 5B, for example. However, in the present example, the agent 230 of the recording server(s) does not install the patch automatically, and the patch comes with its own installer. In such a case, it may be advantageous to provide a patch installation button (that appears or becomes available after the patch is downloaded or pushed) to run the patch installer, and allows the user to proceed with the patch installation. The patch installation button may also become greyed out after the patch has been installed, and a button to download (or push) the patch automatically or manually may also become greyed out before that (as the buttons 100C and 130C). Note that the auto-update button may be configured to download (or push) the patch and run the patch installer.

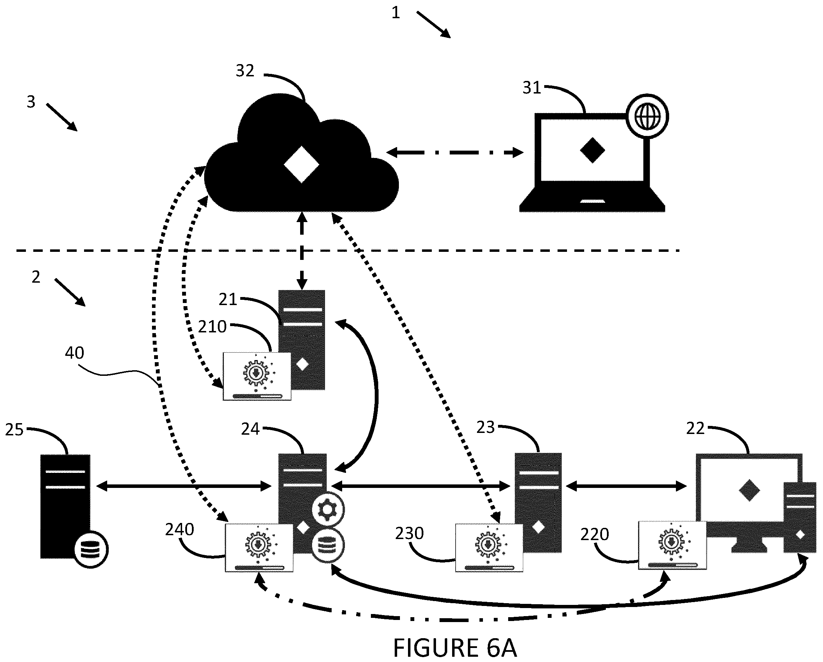

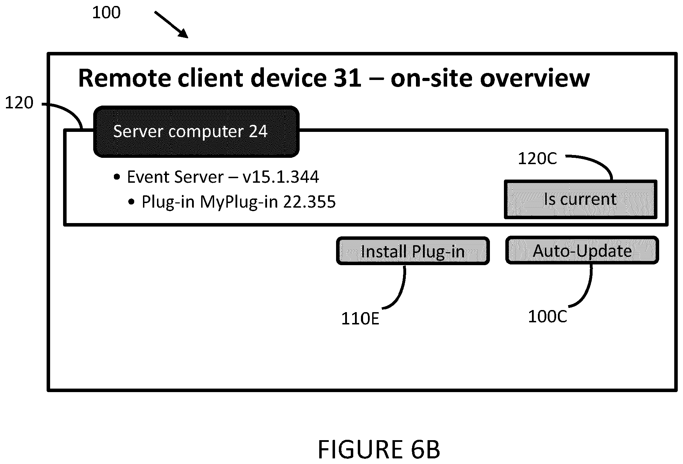

A final example is given with reference to FIGS. 6A and 6B for upgrading a plug-in for the event server that is in the computer server 24, using the second communication channel 40 highlighted in FIG. 6A. This example is similar to the above example related to a patch since the plug-in can be deployed (downloaded and installed) in the same way. Similarly, the plug-in may come with its own installer and be installed using a dedicated button that can become greyed out after installation (as the button 110E).

## Claims

1. A video surveillance system (1) comprising:
- an on-premises system (2) comprising a plurality of servers (21, 23, 24) configured to run video management software comprising server components, the on-premises system (2) further comprising a plurality of agents (210, 230, 240) that run independently from the server components, the on-premises system (2) being configured to enable remote communication with the on-premises system (2), and each agent being configured to enable update and/or upgrade of at least one server component;
- a cloud-based system (3), wherein the video surveillance system (1) is configured to establish bidirectional communication between the on-premises system (2) and cloud-based system (3) through a first communication channel;
the video surveillance system (1) being further configured to establish a plurality of second communication channels (40), each second communication channel establishing a direct connection between at least one agent associated with at least one server component, on the one hand, and the cloud-based system (3), on the other hand;
wherein the agents are configured to use information obtained through the first communication channel to establish the said second communication channels (40);
wherein the video surveillance system (1) is further configured to transmit, from the cloud-based system (3) to the on-premises system (2), software updates and/or upgrades, and to instruct installation, by corresponding agents, of these transmitted software updates and/or upgrades in a predetermined sequence, using the plurality of second communication channels (40);
wherein each of the agents (210, 230, 240) respectively runs on the server (21, 23 , 24) on which the at least one server component associated with that agent is running;
wherein at least one of the server components is a cloud connector (21) configured to enable the said bidirectional communication between the on-premises system (2) and cloud-based system (3) for the first communication channel (11, 20); and
wherein the cloud-based system (3) is further configured to concurrently transmit respective software updates and/or upgrades to corresponding server components (21, 23, 24) using second communication channels (40) associated with these server components.

2. The video surveillance system (1) according to the preceding claim, wherein the predetermined sequence defines an installation order for different software updates and/or upgrades within different server components (24) and an installation order for different software updates and/or upgrades between these server components (24, 21, 23).

3. The video surveillance system (1) according to any one of the preceding claims, wherein at least two different servers in the plurality of servers (24) are different pieces of software running on the same computer hardware.

4. The video surveillance system (1) according to any one of the preceding claims, wherein at least two different servers in the plurality of servers (21, 23, 24) are different pieces of computer hardware.

5. The video surveillance system (1) according to any one of the preceding claims, wherein the video surveillance system (1) is further configured to use at least one of the second communication channels (40) to maintain communication between an agent (210, 230, 240) and the cloud-based system (3) when a server component (21, 23, 24) corresponding to that agent is being updated and/or upgraded.

6. The video surveillance system (1) according to any one of the preceding claims, wherein the agents (210, 230, 240) are configured to perform data origin authentication to confirm origin of the transmitted software updates and/or upgrades.

7. The video surveillance system (1) according to any one of the preceding claims, wherein the agents (210, 230, 240) are configured to be connected to a stable end-point (32) in the cloud-based system (3).

8. The video surveillance system (1) according to any one of the preceding claims, wherein the said video management software comprises a plurality of video management software programs, and wherein at least one agent (240) is associated with server components in the plurality of video management software programs.

9. A method of operating a video surveillance system (1) comprising:
- running video management software comprising server components across a plurality of servers (21, 23, 24) in an on-premises system (2), the on-premises system (2) further comprising a plurality of agents (210, 230, 240) running independently from the server components, the on-premises system (2) enabling remote communication with the on-premises system (2), and each agent enabling update and/or upgrade of at least one server component (S1001);
- establishing bidirectional communication between a cloud-based system (3) and the video management software through a first communication channel (S 1002);
- establishing a plurality of second communication channels (40), each second communication channel establishing a direct connection between at least one agent associated with at least one server component, on the one hand, and the cloud-based system (3), on the other hand;
wherein the agents use information obtained through the first communication channel to establish the said second communication channels (40) (S1003);
- transmitting, from the cloud-based system (3) to the on-premises system (2), software updates and/or upgrades and instructing installation, by corresponding agents, of these transmitted software updates and/or upgrades in a predetermined sequence, using the plurality of second communication channels (40) (S1004);
wherein each of the agents (210, 230, 240) respectively runs on the server (21, 23, 24) on which the at least one server component associated with that agent is running;
wherein at least one of the server components is a cloud connector (21) enabling the said bidirectional communication between the on-premises system (2) and cloud-based system (3) for the first communication channel (11, 20); and
wherein the cloud-based system (3) concurrently transmits respective software updates and/or upgrades to corresponding server components (21, 23, 24) using second communication channels (40) associated with these server components.

10. The method according to preceding claim, wherein the predetermined sequence defines an installation order for different software updates and/or upgrades within different server components (24) and an installation order for different software updates and/or upgrades between these server components (24, 21, 23).

11. The method according to claim 9 or 10, wherein the video surveillance system (1) uses at least one of the second communication channels (40) to maintain communication between an agent (210, 230, 240) and the cloud-based system (3) when a server component (21, 23, 24) corresponding to that agent is being updated.

12. The method according to any one of claims 9 to 11, further comprising concurrently transmitting respective software updates and/or upgrades to corresponding server components (21, 23, 24) using second communication channels (40) associated with these server components.

## Patentansprüche

1. Videoüberwachungssystem (1), umfassend:
- ein Vor-Ort-System (2), das mehrere Server (21, 23, 24) umfasst, die konfiguriert sind, Videoverwaltungssoftware auszuführen, die Serverkomponenten umfasst, wobei das Vor-Ort-System (2) ferner mehrere Agenten (210, 230, 240) umfasst, die unabhängig von den Serverkomponenten ausgeführt werden, wobei das Vor-Ort-System (2) konfiguriert ist, um Fernkommunikation mit dem Vor-Ort-System (2) zu ermöglichen, und ein jeweiliger Agent konfiguriert ist, um eine Aktualisierung und/oder ein Upgrade von mindestens einer Serverkomponente zu ermöglichen;
- ein Cloud-basiertes System (3), wobei das Videoüberwachungssystem (1) konfiguriert ist, um bidirektionale Kommunikation zwischen dem Vor-Ort-System (2) und dem Cloud-basierten System (3) über einen ersten Kommunikationskanal herzustellen;
wobei das Videoüberwachungssystem (1) ferner konfiguriert ist, um mehrere zweite Kommunikationskanäle (40) herzustellen, wobei ein jeweiliger zweiter Kommunikationskanal eine direkte Verbindung einerseits zwischen mindestens einem Agenten, der mindestens einer Serverkomponente zugeordnet ist, und andererseits dem Cloud-basierten System (3) herstellt;
wobei die Agenten konfiguriert sind, um Informationen zu verwenden, die über den ersten Kommunikationskanal erhalten werden, um die zweiten Kommunikationskanäle (40) herzustellen;
wobei das Videoüberwachungssystem (1) ferner konfiguriert ist, um Software-Aktualisierungen und/oder -Upgrades von dem Cloud-basierten System (3) an das Vor-Ort-System (2) zu übertragen und die Installation dieser übertragenen Software-Aktualisierungen und/oder -Upgrades durch entsprechende Agenten in einer vorbestimmten Sequenz unter Verwendung der mehreren zweiten Kommunikationskanäle (40) anzuweisen;
wobei ein jeweiliger der Agenten (210, 230, 240) jeweils auf dem Server (21, 23, 24) ausgeführt wird, auf dem die mindestens eine Serverkomponente, die diesem Agenten zugeordnet ist, ausgeführt wird;
wobei mindestens eine der Serverkomponenten ein Cloud-Verbinder (21) ist, der konfiguriert ist, die bidirektionale Kommunikation zwischen dem Vor-Ort-System (2) und dem Cloud-basierten System (3) für den ersten Kommunikationskanal (11, 20) zu ermöglichen; und
wobei das Cloud-basierte System (3) ferner konfiguriert ist, gleichzeitig jeweilige Software-Aktualisierungen und/oder -Upgrades an entsprechende Serverkomponenten (21, 23, 24) unter Verwendung zweiter Kommunikationskanäle (40), die diesen Serverkomponenten zugeordnet sind, zu übertragen.

2. Videoüberwachungssystem (1) nach dem vorhergehenden Anspruch, wobei
die vorbestimmte Sequenz eine Installationsreihenfolge für verschiedene Software-Aktualisierungen und/oder -Upgrades innerhalb verschiedener Serverkomponenten (24) und eine Installationsreihenfolge für verschiedene Software-Aktualisierungen und/oder -Upgrades zwischen diesen Serverkomponenten (24, 21, 23) definiert.

3. Videoüberwachungssystem (1) nach einem der vorhergehenden Ansprüche, wobei mindestens zwei verschiedene Server der mehreren Server (24) verschiedene Softwareteile sind, die auf derselben Computerhardware laufen.

4. Videoüberwachungssystem (1) nach einem der vorhergehenden Ansprüche,
wobei mindestens zwei verschiedene Server der mehreren Server (21, 23, 24) verschiedene Computerhardwareteile sind.

5. Videoüberwachungssystem (1) nach einem der vorhergehenden Ansprüche,
wobei das Videoüberwachungssystem (1) ferner konfiguriert ist, um mindestens einen der zweiten Kommunikationskanäle (40) zu verwenden, um die Kommunikation zwischen einem Agenten (210, 230, 240) und dem Cloud-basierten System (3) aufrechtzuerhalten, wenn eine Serverkomponente (21, 23, 24), die diesem Agenten entspricht, aktualisiert wird und/oder ein Upgrade erhält.

6. Videoüberwachungssystem (1) nach einem der vorhergehenden Ansprüche,
wobei die Agenten (210, 230, 240) konfiguriert sind, um Datenursprungsauthentifizierung durchzuführen, um den Ursprung der übertragenen Software-Aktualisierungen und/oder -Upgrades zu bestätigen.

7. Videoüberwachungssystem (1) nach einem der vorhergehenden Ansprüche,
wobei die Agenten (210, 230, 240) konfiguriert sind, um mit einem stabilen Endpunkt (32) in dem Cloud-basierten System (3) verbunden zu werden.

8. Videoüberwachungssystem (1) nach einem der vorhergehenden Ansprüche,
wobei die Videoverwaltungssoftware mehrere Videoverwaltungssoftwareprogramme umfasst, und wobei mindestens ein Agent (240) Serverkomponenten in den mehreren Videoverwaltungssoftwareprogrammen zugeordnet ist.

9. Verfahren zum Betreiben eines Videoüberwachungssystems (1), umfassend:
- Ausführen von Videoverwaltungssoftware, die Serverkomponenten umfasst, über mehrere Server (21, 23, 24) in einem Vor-Ort-System (2), wobei das Vor-Ort-System (2) ferner mehrere Agenten (210, 230, 240) umfasst, die unabhängig von den Serverkomponenten ausgeführt werden, wobei das Vor-Ort-System (2) Fernkommunikation mit dem Vor-Ort-System (2) ermöglicht, und ein jeweiliger Agent eine Aktualisierung und/oder ein Upgrade von mindestens einer Serverkomponente ermöglicht (S1001);
- Herstellen von bidirektionaler Kommunikation zwischen einem Cloud-basierten System (3) und der Videoverwaltungssoftware über einen ersten Kommunikationskanal (S1002);
- Herstellen mehrerer zweiter Kommunikationskanäle (40), wobei ein jeweiliger zweiter Kommunikationskanal eine direkte Verbindung einerseits zwischen mindestens einem Agenten, der mindestens einer Serverkomponente zugeordnet ist, und andererseits dem Cloud-basierten System (3) herstellt;
wobei die Agenten Informationen verwenden, die über den ersten Kommunikationskanal erhalten werden, um die zweiten Kommunikationskanäle (40) herzustellen (S1003);
- Übertragen von Software-Aktualisierungen und/oder -Upgrades von dem Cloud-basierten System (3) an das Vor-Ort-System (2) und Anweisen der Installation dieser übertragenen Software-Aktualisierungen und/oder -Upgrades durch entsprechende Agenten in einer vorbestimmten Sequenz unter Verwendung der mehreren zweiten Kommunikationskanäle (40) (S1004);
wobei ein jeweiliger der Agenten (210, 230, 240) jeweils auf dem Server (21, 23, 24) ausgeführt wird, auf dem die mindestens eine Serverkomponente, die diesem Agenten zugeordnet ist, ausgeführt wird;
wobei mindestens eine der Serverkomponenten ein Cloud-Verbinder (21) ist, der die bidirektionale Kommunikation zwischen dem Vor-Ort-System (2) und dem Cloud-basierten System (3) für den ersten Kommunikationskanal (11, 20) ermöglicht; und
wobei das Cloud-basierte System (3) gleichzeitig jeweilige Software-Aktualisierungen und/oder -Upgrades an entsprechende Serverkomponenten (21, 23, 24) unter Verwendung zweiter Kommunikationskanäle (40), die diesen Serverkomponenten zugeordnet sind, überträgt.

10. Verfahren nach dem vorhergehenden Anspruch, wobei die vorbestimmte Sequenz eine Installationsreihenfolge für verschiedene Software-Aktualisierungen und/oder - Upgrades innerhalb verschiedener Serverkomponenten (24) und eine Installationsreihenfolge für verschiedene Software-Aktualisierungen und/oder - Upgrades zwischen diesen Serverkomponenten (24, 21, 23) definiert.

11. Verfahren nach Anspruch 9 oder 10, wobei das Videoüberwachungssystem (1) mindestens einen der zweiten Kommunikationskanäle (40) verwendet, um die Kommunikation zwischen einem Agenten (210, 230, 240) und dem Cloud-basierten System (3) aufrechtzuerhalten, wenn eine Serverkomponente (21, 23, 24), die diesem Agenten entspricht, aktualisiert wird.

12. Verfahren nach einem der Ansprüche 9 bis 11, ferner umfassend das gleichzeitige Übertragen jeweiliger Software-Aktualisierungen und/oder -Upgrades an entsprechende Serverkomponenten (21, 23, 24) unter Verwendung zweiter Kommunikationskanäle (40), die diesen Serverkomponenten zugeordnet sind.

## Revendications

1. Système de vidéosurveillance (1) comprenant :
- un système sur site (2) comprenant une pluralité de serveurs (21, 23, 24) configurés pour exécuter un logiciel de gestion vidéo comprenant des composants serveur, le système sur site (2) comprenant en outre une pluralité d'agents (210, 230, 240) qui s'exécutent indépendamment des composants serveur, le système sur site (2) étant configuré pour permettre une communication à distance avec le système sur site (2), et chaque agent étant configuré pour permettre une mise à jour et/ou une mise à niveau d'au moins un composant serveur ;
- un système infonuagique (3), dans lequel le système de vidéosurveillance (1) est configuré pour établir une communication bidirectionnelle entre le système sur site (2) et le système infonuagique (3) par le biais d'un premier canal de communication ;
le système de vidéosurveillance (1) étant en outre configuré pour établir une pluralité de seconds canaux de communication (40), chaque second canal de communication établissant une connexion directe entre au moins un agent associé à au moins un composant serveur, d'une part, et le système infonuagique (3), d'autre part ;
dans lequel les agents sont configurés pour utiliser des informations obtenues par le biais du premier canal de communication pour établir lesdits seconds canaux de communication (40) ;
dans lequel le système de vidéosurveillance (1) est en outre configuré pour transmettre, du système infonuagique (3) au système sur site (2), des mises à jour et/ou des mises à niveau logicielles, et pour ordonner l'installation, par des agents correspondants, de ces mises à jour et/ou mises à niveau logicielles transmises dans une séquence prédéterminée, en utilisant la pluralité de seconds canaux de communication (40) ;
dans lequel chacun des agents (210, 230, 240) s'exécute respectivement sur le serveur (21, 23, 24) sur lequel s'exécute l'au moins un composant serveur associé à cet agent ;
dans lequel au moins l'un des composants serveur est un connecteur infonuagique (21) configuré pour permettre ladite communication bidirectionnelle entre le système sur site (2) et le système infonuagique (3) pour le premier canal de communication (11, 20) ; et
dans lequel le système infonuagique (3) est en outre configuré pour transmettre simultanément des mises à jour et/ou mises à niveau logicielles respectives à des composants serveur (21, 23, 24) correspondants à l'aide de seconds canaux de communication (40) associés à ces composants serveur.

2. Système de vidéosurveillance (1) selon la revendication précédente, dans lequel la séquence prédéterminée définit un ordre d'installation pour différentes mises à jour et/ou mises à niveau logicielles au sein de différents composants serveur (24) et un ordre d'installation pour différentes mises à jour et/ou mises à niveau logicielles entre ces composants serveur (24, 21, 23).

3. Système de vidéosurveillance (1) selon l'une quelconque des revendications précédentes, dans lequel au moins deux serveurs différents dans la pluralité de serveurs (24) sont des logiciels différents s'exécutant sur le même matériel informatique.

4. Système de vidéosurveillance (1) selon l'une quelconque des revendications précédentes, dans lequel au moins deux serveurs différents dans la pluralité de serveurs (21, 23, 24) sont des composants matériels informatiques différents.

5. Système de vidéosurveillance (1) selon l'une quelconque des revendications précédentes, dans lequel le système de vidéosurveillance (1) est en outre configuré pour utiliser au moins l'un des seconds canaux de communication (40) pour maintenir la communication entre un agent (210, 230, 240) et le système infonuagique (3) lorsqu'un composant serveur (21, 23, 24) correspondant à cet agent est mis à jour et/ou mis à niveau.

6. Système de vidéosurveillance (1) selon l'une quelconque des revendications précédentes, dans lequel les agents (210, 230, 240) sont configurés pour effectuer une authentification d'origine de données pour confirmer l'origine des mises à jour et/ou mises à niveau logicielles transmises.

7. Système de vidéosurveillance (1) selon l'une quelconque des revendications précédentes, dans lequel les agents (210, 230, 240) sont configurés pour être connectés à un point d'extrémité stable (32) dans le système infonuagique (3).

8. Système de vidéosurveillance (1) selon l'une quelconque des revendications précédentes, dans lequel ledit logiciel de gestion vidéo comprend une pluralité de programmes logiciels de gestion vidéo, et dans lequel au moins un agent (240) est associé à des composants serveur dans la pluralité de programmes logiciels de gestion vidéo.

9. Procédé de fonctionnement d'un système de vidéosurveillance (1) comprenant :
- l'exécution d'un logiciel de gestion vidéo comprenant des composants serveur sur une pluralité de serveurs (21, 23, 24) dans un système sur site (2), le système sur site (2) comprenant en outre une pluralité d'agents (210, 230, 240) s'exécutant indépendamment des composants serveur, le système sur site (2) permettant la communication à distance avec le système sur site (2), et chaque agent permettant la mise à jour et/ou la mise à niveau d'au moins un composant serveur (S1001) ;
- l'établissement d'une communication bidirectionnelle entre un système infonuagique (3) et le logiciel de gestion vidéo par le biais d'un premier canal de communication (S1002) ;
- l'établissement d'une pluralité de seconds canaux de communication (40), chaque second canal de communication établissant une connexion directe entre au moins un agent associé à au moins un composant serveur, d'une part, et le système infonuagique (3), d'autre part ;
dans lequel les agents utilisent des informations obtenues par le biais du premier canal de communication pour établir lesdits seconds canaux de communication (40) (S1003) ;
- la transmission, du système infonuagique (3) au système sur site (2), de mises à jour et/ou mises à niveau logicielles et l'instruction de l'installation, par des agents correspondants, de ces mises à jour et/ou mises à niveau logicielles transmises dans une séquence prédéterminée, à l'aide de la pluralité de seconds canaux de communication (40) (S1004) ;
dans lequel chacun des agents (210, 230, 240) s'exécute respectivement sur le serveur (21, 23, 24) sur lequel s'exécute l'au moins un composant serveur associé à cet agent ;
dans lequel au moins l'un des composants serveur est un connecteur infonuagique (21) permettant ladite communication bidirectionnelle entre le système sur site (2) et le système infonuagique (3) pour le premier canal de communication (11, 20) ; et
dans lequel le système infonuagique (3) transmet simultanément des mises à jour et/ou mises à niveau logicielles respectives à des composants serveur (21, 23, 24) correspondants à l'aide de seconds canaux de communication (40) associés à ces composants serveur.

10. Procédé selon la revendication précédente, dans lequel la séquence prédéterminée définit un ordre d'installation pour différentes mises à jour et/ou mises à niveau logicielles au sein de différents composants serveur (24) et un ordre d'installation pour différentes mises à jour et/ou mises à niveau logicielles entre ces composants serveur (24, 21, 23).

11. Procédé selon la revendication 9 ou 10, dans lequel le système de vidéosurveillance (1) utilise au moins l'un des seconds canaux de communication (40) pour maintenir la communication entre un agent (210, 230, 240) et le système infonuagique (3) lorsqu'un composant serveur (21, 23, 24) correspondant à cet agent est mis à jour.

12. Procédé selon l'une quelconque des revendications 9 à 11, comprenant en outre la transmission simultanée de mises à jour et/ou mises à niveau logicielles respectives à des composants serveur (21, 23, 24) correspondants à l'aide de seconds canaux de communication (40) associés à ces composants serveur.
